# FASCICULE DE BREVET EUROPEEN

(11) **EP 3 325 819 B1**
(45) Date de publication et mention de la délivrance du brevet: **28.08.2019**
(21) Numéro de dépôt: 16747839.5
(22) Date de dépôt: 15.07.2016
(51) Int. Cl.: F16B 5/00

(54) **ASSEMBLAGE PAR LIAISON MÉCANIQUE COMPORTANT AU MOINS UNE PIÈCE EN MATÉRIAU COMPOSITE**
ANORDNUNG ÜBER EIN MECHANISCHES GESTÄNGE MIT MINDESTENS EINEM TEIL AUS EINEM VERBUNDWERKSTOFF
ASSEMBLY VIA MECHANICAL LINKAGE COMPRISING AT LEAST ONE PART MADE OF A COMPOSITE MATERIAL

(30) Priorité: 17.07.2015 FR 1556776
(43) Date de publication de la demande: 30.05.2018
(73) Titulaire: SAFRAN AIRCRAFT ENGINES, 75015 Paris (FR)
(72) Inventeur: MATEO, Julien, 33360 Carignan de Bordeaux (FR)
(74) Mandataire: Cabinet Beau de Loménie
(86) Numéro de dépôt international: PCT/FR2016/051822
(87) Numéro de publication internationale: WO 2017/013340

(56) Documents cités:
- FR-A1- 3 007 091
- US-A1- 2010 278 608

## Description

### Arrière-plan de l'invention

Du document US 2010/278608 A1 est connu un assemblage comprenant une première pièce en matériau composite et une deuxième pièce maintenues l'une contre l'autre par au moins un système de fixation.

L'invention concerne l'assemblage par liaison mécanique de pièces en matériau composite thermostructural, tel qu'un matériau composite à matrice céramique (CMC) ou carbone/carbone (C/C), matériau typiquement formé d'un substrat poreux, tel qu'un substrat fibreux poreux densifié par une matrice. Les fibres du substrat peuvent être notamment en carbone ou céramique. La matrice est en une céramique réfractaire telle que, par exemple, carbure, oxyde, nitrure, borure ou oxyde réfractaire. Les matériaux composites thermostructuraux sont remarquables par leurs propriétés mécaniques, qui les rendent aptes à constituer des éléments de structure, et par leur capacité à conserver ces propriétés à des températures élevées.

L'invention concerne plus particulièrement les comportements mécanique et thermique des liaisons mécaniques utilisées pour assembler des pièces en matériau composite thermostructural lorsque celles-ci sont destinées à être baignées dans des flux haute température, comme par exemple dans le cas de la fabrication de tout ou partie d'ensembles d'arrière-corps de moteur aéronautique tels que des cônes d'échappement (encore appelés « plugs » ou « exhaust ») ou de volets de tuyère à section variable, ou encore tout autre carénage chaud tel que le carénage aérodynamique arrière pour mât d'accrochage de moteur d'aéronef (APF pour « Aft Pylon Fairing »).

Dans ces applications, les pièces à assembler sont en général relativement fines (épaisseur de quelques millimètres) et doivent répondre à des exigences aérodynamiques, ce qui conduit à utiliser préférentiellement des éléments de serrage de type surface plane ou « flush » pour réaliser les liaisons mécaniques entre les pièces. Dans le cas des assemblages utilisés pour réaliser des parties d'arrière-corps de moteur aéronautique, on utilise généralement des éléments de serrage présentant, d'un côté de l'assemblage, une tête fraisée logée dans une fraisure ménagée dans une des pièces à assembler et, de l'autre côté, une colonnette ou rondelle permettant une reprise des dilatations différentielles entre l'élément de serrage, qui se dilatent significativement, et les pièces en matériaux composite thermostructural, qui se dilatent moins. L'intégration de la tête de l'élément de serrage dans une fraisure (« flush ») présente d'un côté de l'assemblage permet d'obtenir de bonnes performances aérodynamiques. Cependant, l'effort de pré-charge ou serrage appliqué à la liaison par l'élément de serrage doit être limité afin de ne pas endommager par matage et/ou cisaillement les pièces en matériau composite à assembler.

### Objet et résumé de l'invention

L'invention a pour but de proposer une solution pour l'assemblage d'au moins une pièce en matériau composite utilisant un ou plusieurs systèmes de fixation qui présentent un coefficient de dilatation thermique supérieur au coefficient de dilatation thermique de la ou des pièces en matériau composite, le système de fixation devant permettre un effort de pré-charge ou de serrage élevé sans impacter les performances mécaniques de l'assemblage afin d'améliorer la capacité de liaison.

Ce but est atteint avec un assemblage comprenant une première pièce en matériau composite et une deuxième pièce maintenues l'une contre l'autre par au moins un système de fixation comprenant un élément de serrage comportant une tête à partir de laquelle s'étend une tige, le système de fixation comprenant en outre une douille, ladite douille comportant une collerette présentant une face interne et une face externe de forme conique, la tête de l'élément de serrage étant en appui contre la face interne de la collerette tandis que la face externe de la collerette est en appui contre une fraisure ménagée dans la première pièce, caractérisé en ce que le système de fixation comprend une vis comportant une tête fraisée à partir de laquelle s'étend une tige munie d'une partie filetée et un écrou comportant un taraudage coopérant avec la partie filetée de la vis, la collerette présentant une face interne de forme conique recevant la tête fraisée de la vis, la face externe de la collerette présentant un angle de cône supérieur à l'angle de cône de la face interne de ladite collerette.

Ainsi, en utilisant une douille dont la collerette comporte une face externe présentant une forme conique et s'étendant sur un diamètre supérieur à la largeur ou au diamètre de la tête de l'élément de serrage, on augmente la surface d'appui de la tête de l'élément de serrage contre la pièce en matériau composite. Cette augmentation de surface d'appui permet de réduire la pression de matage et la contrainte de cisaillement inter-laminaire sur la pièce afin d'augmenter sans risque d'endommagement l'effort de serrage entre les pièces, ce qui augmente la capacité de reprise d'effort de la liaison. En outre, le système de fixation est conçu pour appliquer un effort de maintien continu par dilation radiale, ce qui permet de compenser la dilatation, en particulier axiale, de chaque système de fixation et de conserver un effort de serrage à chaud.

L'assemblage de l'invention est réalisé avec des liaisons mécaniques qui sont intégrées d'un côté de celui-ci, c'est-à-dire qui ne dépassent pas de la surface externe d'une des pièces assemblées. L'assemblage de l'invention peut, par conséquent, être baigné d'un côté dans un flux haute température sans dégradation des performances aérodynamiques par les systèmes de liaison.

L'interface vis-douille étant découplée de celle avec la pièce, il est possible d'utiliser des vis standards, c'est-à-dire facile et économique à approvisionner, l'angle de cône présenté par la face interne de la collerette de la douille pouvant être adapté à celui de vis standards sans impact sur la liaison.

Selon un autre mode de réalisation de l'assemblage conforme à l'invention, le système de fixation comprend un rivet comportant une tête fraisée à partir de laquelle s'étend une tige comportant une extrémité élargie et une première rondelle comportant une fraisure centrale sur la surface de laquelle repose l'extrémité élargie de la tige du rivet, la face externe de la collerette présentant un angle de cône supérieur à l'angle de cône de la face interne de ladite collerette.

Selon un aspect de l'assemblage de l'invention, le système de fixation comprend en outre une rondelle interposée entre les faces en regard des première et deuxième pièces à assembler. La rondelle permet de ménager un espace entre les pièces à assembler pour contrôler la zone de contact en termes de forme, de dimension et d'état de surface du contact entre les pièces. La rondelle peut également avoir une fonction de compensation du serrage de liaison en utilisant pour la rondelle un matériau adapté.

Selon un autre aspect de l'invention, le système de fixation comprend en outre une entretoise interposée entre la deuxième pièce assemblée et l'écrou dans le cas d'un système de fixation à vis ou entre la deuxième pièce et la première rondelle dans le cas d'un système de fixation à rivet, qui permet de faire transiter les efforts entre l'écrou ou la première rondelle et la pièce en réduisant les ruptures d'inertie. L'entretoise présente de préférence un coefficient de dilatation thermique supérieur au coefficient de dilatation thermique de la vis ou du rivet afin de maintenir l'effort de serrage appliqué par la liaison a tous les niveaux de température.

Selon un autre aspect de l'assemblage de l'invention, la deuxième pièce est en métal ou en matériau composite.

Selon encore un autre aspect de l'assemblage de l'invention, les première et deuxième pièces présentent chacune une épaisseur inférieure à 3 mm.

Selon toujours un autre aspect de l'assemblage de l'invention, les première et deuxième pièces sont des pièces d'arrière-corps de moteur aéronautique ou de carénage aérodynamique arrière pour mât d'accrochage de moteur d'aéronef.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective montrant la réalisation d'un assemblage conformément à un mode de réalisation de l'invention,
- la figure 2 est une vue schématique respectivement en coupe montrant l'assemblage de la figure 1 ;
- la figure 3 est une vue schématique en perspective montrant la réalisation d'un assemblage conformément à un autre mode de réalisation de l'invention,
- la figure 4 est une vue schématique en perspective montrant une variante de réalisation de la douille de la figure 3;
- la figure 5 est une vue schématique respectivement en coupe montrant l'assemblage de la figure 3 ;
- la figure 6 est une vue schématique en perspective montrant la réalisation d'un assemblage conformément à un autre mode de réalisation de l'invention,
- la figure 7 est une vue schématique en coupe montrant l'assemblage de la figure 6.

### Description détaillée de mode de réalisation

La présente invention s'applique d'une manière générale à tout assemblage entre des pièces en matériau composite utilisant un ou plusieurs systèmes de fixation qui présentent un coefficient de dilatation thermique supérieur au coefficient de dilatation thermique des pièces en matériau composite, le système de fixation ne devant pas ou très peu impacter les performances aérodynamique de l'assemblage.

Les pièces à assembler peuvent être notamment en composite thermostructural à matrice céramique (CMC), c'est-à-dire tout matériau formé d'un renfort en fibres réfractaires (carbone ou céramique) densifié par une matrice céramique elle aussi réfractaire, tels que des matériaux C/SiC, SiC/SiC, C/C-SiC, etc. Les pièces peuvent être également en d'autres matériaux composites présentant un faible coefficient de dilatation tels les matériaux C/C (renfort et matrice en carbone).

L'assemblage selon l'invention est notamment, mais non exclusivement, destiné à être utilisé pour la réalisation tout ou partie d'ensembles d'arrière-corps de moteur aéronautique tels que des cônes d'échappement (encore appelés « plugs » ou « exhaust »), volets de tuyère à section variable, ou carénage aérodynamique arrière pour mât d'accrochage de moteur d'aéronef (encore appelé APF pour « Aft Pylon Fairing »).

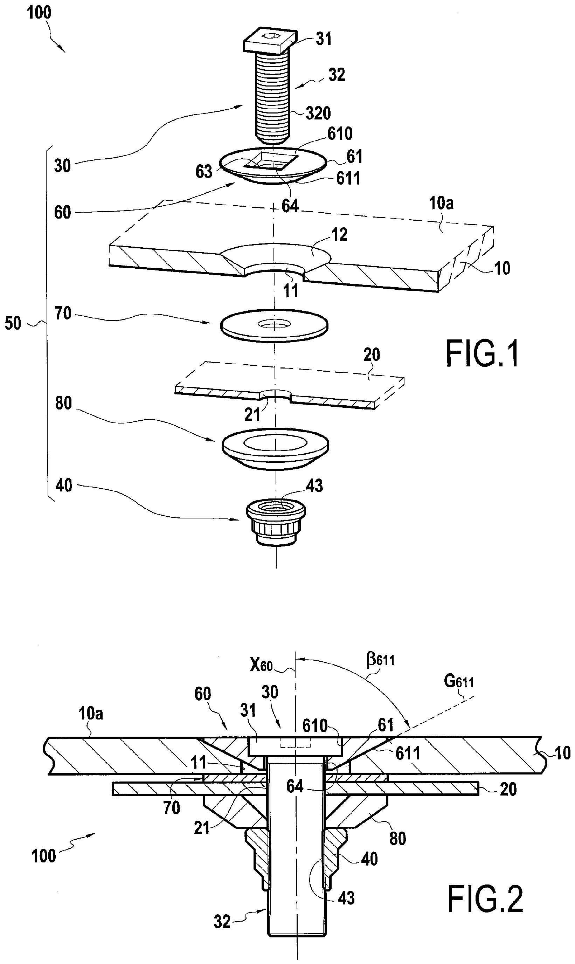

Les figures 1 et 2 illustrent un assemblage conformément à un mode de réalisation de l'invention. Comme illustré sur la figure 1, un assemblage 100 entre deux pièces 10 et 20, la pièce 10 étant en matériau composite thermostructural CMC tandis que la pièce 20 est en métal, est réalisé au moyen d'un système de fixation 50 comprenant une vis 30, un écrou 40, une douille 60, une rondelle 70 et une entretoise 80. Plus précisément, la vis 30 comporte une tête parallélépipédique 31 à partir de laquelle s'étend une tige 32 comportant une partie filetée 320 au niveau de sa partie distale. L'écrou 40 comporte un taraudage 43 destiné à coopérer avec la partie filetée 32 de la vis 30. La douille 60 comporte une collerette 61 présentant une face interne 610 de forme parallélépipédique correspondant à celle de la tête parallélépipédique 31 de la vis 30 et une face externe 611 de forme conique. La vis 30 et l'écrou 40 peuvent être notamment réalisés en un des matériaux suivants : Inconel® 625 ou 718, Waspaloy®, Haynes® 282®, acier inoxydable de type A286, titane, alliage TZM (Ti-Zr-Mo) et tout autre acier haute performance.

Comme illustrée sur la figure 2, la collerette 61 de la douille 60 est logée dans une fraisure 12 ménagée dans la pièce 10 tandis que la tige 32 de la vis 30 traverse des orifices 11 et 21 ménagés respectivement dans les pièces 10 et 20. La collerette 61 délimite à l'intérieur de la douille 60 un espace interne 63 dans lequel est logée la vis 30. La tête parallélépipédique 31 de la vis 30 est logée dans la collerette 61 tandis qu'une partie proximale de la tige 32 est logée dans une ouverture 64 ménagée dans le fond de l'espace interne 63 de la douille 60. Les pièces 10 et 20 sont assemblées l'une contre l'autre par serrage de l'écrou 40 sur la partie filetée 320 de la tige 32 de la vis 30, l'entretoise 80 étant interposée entre l'écrou 40 et la pièce 20.

La tête parallélépipédique 31 de la vis 30 est en appui contre la face interne 610 de la collerette 61 de la douille 60 tandis que la face externe 611 de la collerette 61 est en appui contre la fraisure 12 ménagée dans la pièce 10. La face externe 611 de la collerette 61 présente un angle de cône β₆₁₁ correspondant à l'angle formé entre l'axe X₆₀ de révolution de la collerette et la génératrice G₆₁₁ da la face externe 611 de la collerette 61.

Conformément à l'invention, en utilisant une douille dont la collerette comporte une face externe de forme conique, on augmente la surface d'appui de la tête parallélépipédique 31 de la vis 30 contre la pièce 10. Cette augmentation de surface d'appui permet de réduire la pression de matage ainsi que la contrainte de cisaillement inter-laminaire sur la pièce 10 afin d'augmenter sans risque d'endommagement l'effort de serrage entre les pièces 10 et 20, ce qui augmente la capacité de reprise d'effort de la liaison. En outre, l'interface vis-douille étant découplée de celle avec la pièce 10, il est possible d'utiliser des vis standards, c'est-à-dire des vis facile et économique à approvisionner.

A titre d'exemple non limitatif, l'angle de cône β₆₁₁ de la face externe 611 de la collerette peut être compris entre 45° et 75°.

Le matériau de la douille 60 est choisi pour son coefficient de dilatation thermique qui est de préférence supérieur à celui de la vis et qui doit permettre de compenser en partie la différence de dilatation entre le matériau composite et le métal par une dilatation radiale « cône sur cône » qui entraîne une mise en tension radiale. Le matériau de la douille 60 est en outre choisi pour ses caractéristiques haute température. La douille peut être notamment réalisée en un des matériaux suivants : Inconel® 625 ou 718, Waspaloy®, Haynes® 282®, acier inoxydable de type A286, titane, alliage TZM (Ti-Zr-Mo) et tout autre acier haute performance.

L'entretoise 80 permet de faire transiter les efforts entre l'écrou 40 et la pièce 20 en évitant les ruptures d'inertie. Le système de fixation 50 peut toutefois ne pas comprendre l'entretoise 80, l'écrou 40 étant dans ce cas en contact direct avec la pièce 20. Le matériau de l'entretoise 80 est choisi pour ses caractéristiques à haute température et son coefficient de dilatation thermique qui est de préférence supérieur à celui de la vis de manière à rattraper une partie de l'écart de dilatation entre le matériau composite et l'entretoise. L'entretoise peut être notamment réalisée en un des matériaux suivants : Inconel® 625 ou 718, Waspaloy®, Haynes® 282®, acier inoxydable de type A286, titane, alliage TZM (Ti-Zr-Mo) et tout autre acier haute performance.

La rondelle 70 permet de ménager un espace entre les pièces 10 et 20 à assembler afin de contrôler la zone de contact en termes de forme, de dimension et d'état de surface du contact entre les pièces. La rondelle 70 peut également avoir une fonction de compensation du serrage de liaison en utilisant pour la rondelle un matériau adapté tel que par exemple Inconel® 625 ou 718, Waspaloy®, Haynes® 282®, acier inoxydable de type A286, titane, alliage TZM (Ti-Zr-Mo) et tout autre acier haute performance. L'utilisation de la rondelle 70 est optionnelle en ce que le système de fixation peut ne pas comprendre la rondelle 70, les pièces 10 et 20 étant dans ce cas directement en contact.

En servant de guide pour la vis 30 lors du serrage de l'écrou 40, la douille 60 peut également assurer le centrage de la liaison par l'ajout d'une partie cylindrique (non représentée sur les figures 1 et 2).

Comme illustré sur la figure 2, on constate que du côté de la face externe 10a de la pièce 10, la tête 31 de la vis 30 est totalement logée dans la collerette 61, elle-même totalement logée dans la fraisure 12, la tête de la vis ainsi que la douille ayant, par conséquent, très peu d'impact sur l'aérodynamisme de la pièce 10 (surface plane ou « flush »). En outre, lorsque l'assemblage 100 est soumis à des températures élevées, par exemple dans le cas où il est baigné dans un flux chaud de gaz de combustion, la dilatation radiale de la collerette 61 permet de maintenir le contact avec la fraisure 12, et ce malgré la dilatation axiale de la vis 30 (effet de chasse).

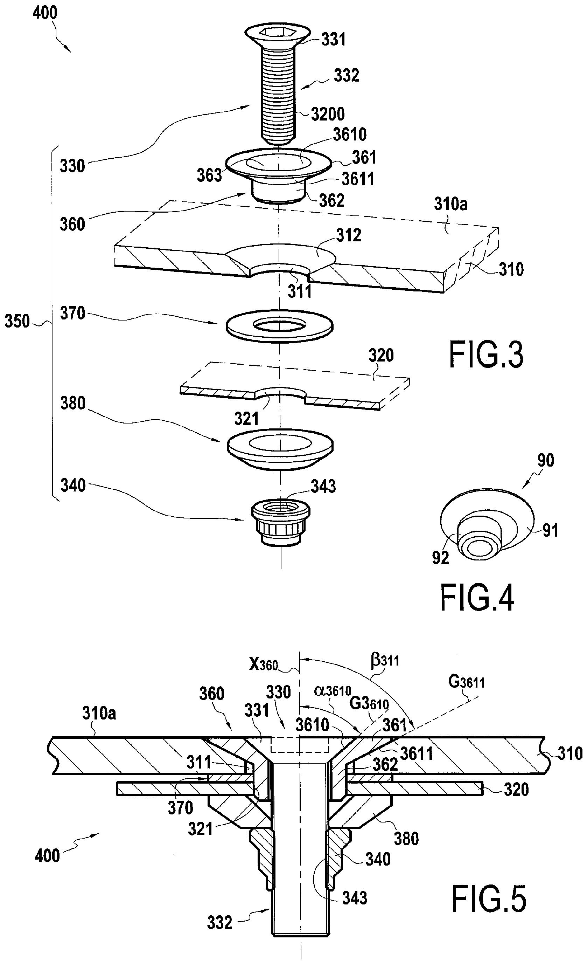

Les figures 3 et 5 illustrent un assemblage conformément à un autre mode de réalisation de l'invention. Comme illustré sur la figure 3, un assemblage 400 entre deux pièces 310 et 320, la pièce 310 étant en matériau composite CMC tandis que la pièce 20 est en métal, est réalisé au moyen d'un système de fixation 350 comprenant une vis 330, un écrou 340, une douille 360, une rondelle 370 et une entretoise 380. Plus précisément, la vis 330 comporte une tête fraisée 331 à partir de laquelle s'étend une tige 332 comportant une partie filetée 3200 au niveau de sa partie distale. L'écrou 340 comporte un taraudage 343 destiné à coopérer avec la partie filetée 332 de la vis 330. La douille 360 comporte une collerette 361 présentant une face interne 3610 et une face externe 3611, chacune de forme conique. Dans l'exemple décrit ici, la douille 360 comporte en outre un fût 362 s'étendant à partir de la collerette 61. Le fût 362 est optionnel, la douille 360 ne pouvant comporter que la collerette 361. La vis 330 et l'écrou 340 peuvent être notamment réalisés en un des matériaux suivants : Inconel® 625 ou 718, Waspaloy®, Haynes® 282®, acier inoxydable de type A286, titane, alliage TZM (Ti-Zr-Mo) et tout autre acier haute performance.

Comme illustrée sur la figure 5, la collerette 361 de la douille 360 est logée dans une fraisure 312 ménagée dans la pièce 310 tandis que le fût 362 traverse des orifices 311 et 321 ménagés respectivement dans les pièces 310 et 320. La collerette 361 et le fût 362 délimitent à l'intérieur de la douille 360 un espace interne 363 dans lequel est logée la vis 330. La tête fraisée 331 de la vis 330 est logée dans la collerette 361 tandis qu'une partie proximale de la tige 332 est logée dans le fût 362. Les pièces 310 et 320 sont assemblées l'une contre l'autre par serrage de l'écrou 340 sur la partie filetée 3200 de la tige 332 de la vis 330, l'entretoise 380 étant interposée entre l'écrou 340 et la pièce 320.

La tête fraisée 331 de la vis 330 est en appui contre la face interne 3610 de la collerette 361 de la douille 360 tandis que la face externe 3611 de la collerette 361 est en appui contre la fraisure 312 ménagée dans la pièce 310. La face externe 3611 de la collerette 361 présente un angle de cône β₃₆₁₁, qui est supérieur à l'angle de cône α₃₆₁₀ présenté par la face interne 3610 de ladite collerette. Les angles de cône β₃₆₁₁ et α₃₆₁₀ correspondent à l'angle formé entre l'axe X₃₆₀ de révolution de la collerette et les génératrices G₃₆₁₀ et G₃₆₁₁ respectivement des faces interne 3610 et externe 3611 de la collerette 361.

Conformément à l'invention, en utilisant une douille dont la collerette comporte une face externe ayant un angle de cône et un diamètre supérieurs à ceux de sa face interne, on augmente la surface d'appui de la tête de vis contre la pièce 310. Cette augmentation de surface d'appui permet de réduire la pression de matage ainsi que la contrainte de cisaillement inter-laminaire sur la pièce 310 afin d'augmenter sans risque d'endommagement l'effort de serrage entre les pièces 310 et 320, ce qui augmente la capacité de reprise d'effort de la liaison. En outre, l'interface vis-douille étant découplée de celle avec la pièce 310, il est possible d'utiliser des vis standards, c'est-à-dire facile et économique à approvisionner, l'angle de cône α₃₆₁₀ présenté par la face interne 3610 pouvant être adapté à celui de vis standards sans impact sur la liaison.

A titre d'exemple non limitatif, l'angle de cône α₃₆₁₀ de la face interne 3610 de la collerette 361 peut être compris entre 30° et 60° tandis que l'angle de cône β₃₆₁₁ de la face externe 3611 de la collerette peut être compris entre 45° et 75°.

Le matériau de la douille 360 est choisi pour ses caractéristiques haute température et pour son coefficient de dilatation thermique qui est de préférence supérieur à celui de la viset qui doit permettre de compenser en partie la différence de dilatation entre le matériau composite et le métal par une dilatation radiale « cône sur cône » qui entraîne une mise en tension radiale. La douille peut être notamment réalisée en un des matériaux suivants : Inconel® 625 ou 718, Waspaloy®, Haynes® 282®, acier inoxydable de type A286, titane, alliage TZM (Ti-Zr-Mo) et tout autre acier haute performance.

L'entretoise 380 permet de faire transiter les efforts entre l'écrou 340 et la pièce 320 en évitant les ruptures d'inertie. Le système de fixation 350 peut toutefois ne pas comprendre l'entretoise 380, l'écrou 340 étant dans ce cas en contact direct avec la pièce 320. Le matériau de l'entretoise 380 est choisi pour ses caractéristiques à haute température et son coefficient de dilatation thermique qui est de préférence supérieur à celui de la vis de manière à rattraper une partie de l'écart de dilatation entre le matériau composite et l'entretoise. L'entretoise peut être notamment réalisée en un des matériaux suivants : Inconel® 625 ou 718, Waspaloy®, Haynes® 282®, acier inoxydable de type A286, titane, alliage TZM (Ti-Zr-Mo) et tout autre acier haute performance.

La rondelle 370 permet de ménager un espace entre les pièces 310 et 320 à assembler afin de contrôler la zone de contact en termes de forme, de dimension et d'état de surface du contact entre les pièces. La rondelle 70 peut également avoir une fonction de compensation du serrage de liaison en utilisant pour la rondelle un matériau adapté tel que par exemple Inconel® 625 ou 718, Waspaloy®, Haynes® 282®, acier inoxydable de type A286, titane, alliage TZM (Ti-Zr-Mo) et tout autre acier haute performance.

L'utilisation de la rondelle 70 est optionnelle en ce que le système de fixation peut ne pas comprendre la rondelle 70, les pièces 10 et 20 étant dans ce cas directement en contact.

En servant de guide pour la vis 30 lors du serrage de l'écrou 40, la douille 60 peut également assurer le centrage de la liaison lorsqu'elle est munie d'une partie cylindrique telle que le fût 362.

Selon une variante de réalisation représentée en figure 4, le système de fixation de l'invention peut comprendre une douille 90 dont le fût 92 est excentré par rapport à sa collerette 91. Une telle douille permet de rattraper un jeu lors du serrage avec des vis ayant une tige non alignée axialement avec la tête de vis.

Comme illustré sur la figure 5, on constate que du côté de la face externe 310a de la pièce 310, la tête 331 de la vis 330 est totalement logée dans la collerette 361, elle-même totalement logée dans la fraisure 312, la tête de la vis ainsi que la douille ayant, par conséquent, très peu d'impact sur l'aérodynamisme de la pièce 310 (surface plane ou « flush »). En outre, lorsque l'assemblage 400 est soumis à des températures élevées, par exemple dans le cas où il est baigné dans un flux chaud de gaz de combustion, la dilatation radiale de la collerette 361 permet de maintenir le contact avec la fraisure 312, et ce malgré la dilatation axiale de la vis 330 (effet de chasse).

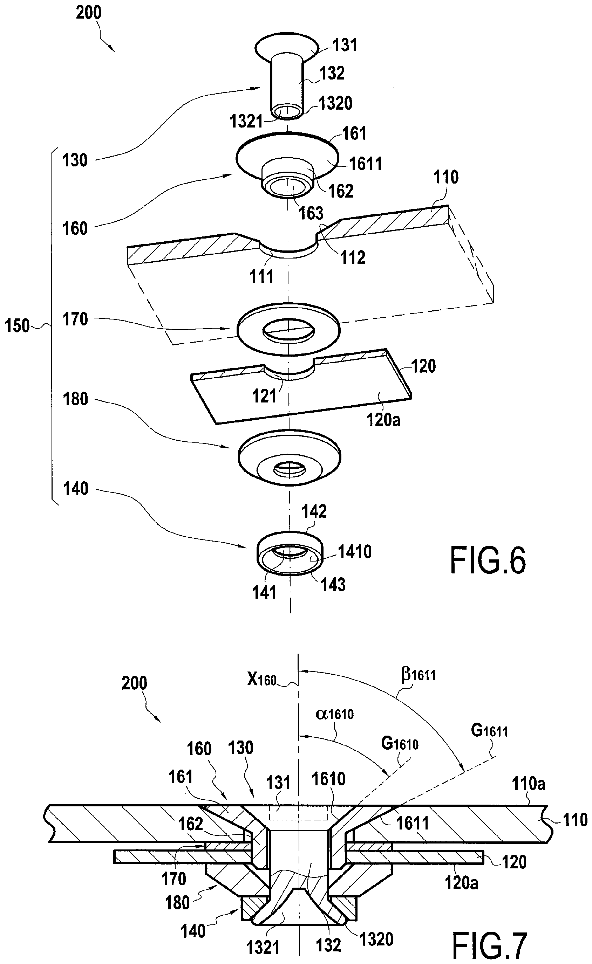

Les figures 6 et 7 illustrent un assemblage conformément à un autre mode de réalisation de l'invention. Comme illustré sur la figure 6, un assemblage 200 entre deux pièces 110 et 120, la pièce 110 étant en matériau composite CMC tandis que la pièce 120 est en métal, est réalisé au moyen d'un système de fixation 150 comprenant un rivet 130, une première rondelle 140, une douille 160, une deuxième rondelle 170 et une entretoise 180. Plus précisément, le rivet 130 comporte une tête fraisée 131 à partir de laquelle s'étend une tige 132 La rondelle 140 comporte une ouverture centrale 141 destinée à recevoir l'extrémité libre 1320 de la tige 132. La rondelle 140 comporte également une première face plane 142 destinée à être plaquée sur l'entretoise 180 ou la surface externe 120a de la deuxième pièce 120 en l'absence de l'entretoise 180 et une deuxième face 143. L'ouverture centrale 141 de la rondelle 140 comporte une fraisure 1410. Le rivet 130 et la rondelle 140 peuvent être notamment réalisés en un des matériaux suivants : Inconel® 725 ou 718, Waspaloy®, Haynes® 282®, acier inoxydable de type A286, titane, alliage TZM (Ti-Zr-Mo) et tout autre acier haute performance.

Comme illustrée sur la figure 7, la collerette 161 de la douille 160 est logée dans une fraisure 112 ménagée dans la pièce 110 tandis que le fût 162 traverse des orifices 111 et 121 ménagés respectivement dans les pièces 110 et 120. La collerette 161 et le fût 162 délimitent à l'intérieur de la douille 160 un espace interne 163 dans lequel est logé le rivet 130. La tête fraisée 131 du rivet 130 est logée dans la collerette 161 tandis qu'une partie proximale de la tige 132 est logée dans le fût 162. L'extrémité libre 1320 qui comporte un évidement central 1321 est élargie par écrasement de manière à rabattre les bords de l'extrémité 1320 sur la fraisure 1410 de l'ouverture centrale 141 de la rondelle 140. L'élargissement de l'extrémité libre peut être réalisé à chaud ou à froid en fonction du matériau constitutif du rivet à l'aide d'une bouterolle. Les deux pièces 110 et 120 sont alors solidarisées entre elles par rivetage. Le rivet 130 peut être remplacé par un rivet à sertir (type « lock boit »).

La tête fraisée 131 du rivet 130 est en appui contre la face interne 1610 de la collerette 161 de la douille 160 tandis que la face externe 1611 de la collerette 161 est en appui contre la fraisure 112 ménagée dans la pièce 110. La face externe 1611 de la collerette 161 présente un angle de cône β₁₆₁₁ et un diamètre qui sont supérieurs à l'angle de cône α₁₆₁₀ et au diamètre présentés par la face interne 1610 de ladite collerette. Les angles de cône β₁₆₁₁ et α₁₆₁₀ correspondent à l'angle formé entre l'axe X₁₆₀ de révolution de la collerette et les génératrices G₁₆₁₀ et G₁₆₁₁ respectivement des faces interne 1610 et externe 1611 de la collerette 161.

Conformément à l'invention, en utilisant une douille dont la collerette comporte une face externe ayant un angle de cône et un diamètre supérieurs à ceux de sa face interne, on augmente la surface d'appui de la tête du rivet contre la pièce 110. Cette augmentation de surface d'appui permet de réduire la pression de matage ainsi que la contrainte de cisaillement inter-laminaire sur la pièce 110 afin d'augmenter sans risque d'endommagement l'effort de serrage entre les pièces 110 et 120, ce qui augmente la capacité de reprise d'effort de la liaison.

A titre d'exemple non limitatif, l'angle de cône α₁₆₁₀ da la face interne 1610 de la collerette 161 peut être compris entre 30° et 60° tandis que l'angle de cône β₁₆₁₁ de la face externe 1611 de la collerette peut être compris entre 45° et 75°.

Le matériau de la douille 160 est choisi pour ses caractéristiques à haute température et pour son coefficient de dilatation thermique qui est de préférence supérieur à celui de la vis et qui doit permettre de compenser en partie la différence de dilatation entre le matériau composite et le métal par une dilatation radiale « cône sur cône » qui entraîne une mise en tension radiale. La douille peut être notamment réalisée en un des matériaux suivants : Inconel® 725 ou 718, Waspaloy®, Haynes® 282®, acier inoxydable de type A286, titane, alliage TZM (Ti-Zr-Mo) et tout autre acier haute performance.

L'entretoise 180 permet de faire transiter les efforts entre la rondelle 140 et la pièce 120 en évitant les ruptures d'inertie. Le système de fixation 150 peut toutefois ne pas comprendre l'entretoise 180, la rondelle 140 étant dans ce cas en contact direct avec la pièce 120. Le matériau de l'entretoise 180 est choisi pour ses caractéristiques à haute température et son coefficient de dilatation thermique qui est de préférence supérieur à celui de la vis de manière à rattraper une partie de l'écart de dilatation entre le matériau composite et l'entretoise. L'entretoise peut être notamment réalisée en un des matériaux suivants : Inconel® 725 ou 718, Waspaloy®, Haynes® 282®, acier inoxydable de type A286, titane, alliage TZM (Ti-Zr-Mo) et tout autre acier haute performance.

La deuxième rondelle 170 permet de ménager un espace entre les pièces 110 et 120 à assembler ou de contrôler la zone de contact en termes de forme, de dimension et d'état de surface du contact entre les pièces. La rondelle 170 peut également avoir une fonction de compensation du serrage de liaison en utilisant pour la rondelle un matériau adapté tel que par exemple Inconel® 725 ou 718, Waspaloy®, Haynes® 282®, acier inoxydable de type A286, titane, alliage TZM (Ti-Zr-Mo) et tout autre acier haute performance. L'utilisation de la rondelle 170 est optionnelle en ce que le système de fixation peut ne pas comprendre la rondelle 170, les pièces 110 et 120 étant dans ce cas directement en contact.

Comme illustré sur la figure 7, on constate que du côté de la face externe 110a de la pièce 110, la tête 131 du rivet 130 est totalement logée dans la collerette 161, elle-même totalement logée dans la fraisure 112, la tête du rivet ainsi que la douille ayant, par conséquent, très peu d'impact sur l'aérodynamisme de la pièce 110 (surface plane ou « flush »). En outre, lorsque l'assemblage 200 est soumis à des températures élevées, par exemple dans le cas où il est baigné dans un flux chaud de gaz de combustion, la dilatation radiale de la collerette 161 permet de maintenir le contact avec la fraisure 112, et ce malgré la dilatation axiale du rivet 130. Un effet similaire de compensation se produit au niveau de la portion d'extrémité élargie 1320 du rivet 130 en contact avec la fraisure 1410 de l'ouverture 141 de la rondelle 140.

## Revendications

1. Assemblage (400) comprenant une première pièce (310) en matériau composite et une deuxième pièce (320) maintenues l'une contre l'autre par au moins un système de fixation (350) comprenant un élément de serrage comportant une tête à partir de laquelle s'étend une tige, le système de fixation comprenant en outre une douille (360), ladite douille comportant une collerette (361) présentant une face interne (3610) et une face externe (3611) de forme conique, la tête (331) de l'élément de serrage (330) étant en appui contre la face interne de la collerette tandis que la face externe de la collerette est en appui contre une fraisure (312) ménagée dans la première pièce (310), **caractérisé en ce que** le système de fixation (350) comprend une vis (330) comportant une tête fraisée (331) à partir de laquelle s'étend une tige (332) munie d'une partie filetée (3200) et un écrou (340) comportant un taraudage (343) coopérant avec la partie filetée (332) de la vis (330), la collerette (361) présentant une face interne (3610) de forme conique recevant la tête fraisée (331) de la vis (330) et **en ce que** la face externe (3611) de la collerette (361) présente un angle de cône (β₃₆₁₁) supérieur à l'angle de cône (α₃₆₁₀) de la face interne (3610) de ladite collerette.

2. Assemblage selon la revendication 1, dans lequel le système de fixation comprend en outre une rondelle (370) interposée entre les faces en regard des première et deuxième pièces (310, 320) en matériau composite.

3. Assemblage selon la revendication 1 ou 2, dans lequel le système de fixation comprend en outre une entretoise (380) interposée entre la deuxième pièce et l'écrou.

4. Assemblage selon la revendication 3, dans lequel l'entretoise (380) présente un coefficient de dilatation thermique supérieur au coefficient de dilatation thermique de la vis.

5. Assemblage (200) comprenant une première pièce (110) en matériau composite et une deuxième pièce (120) maintenues l'une contre l'autre par au moins un système de fixation (150) comprenant un élément de serrage comportant une tête à partir de laquelle s'étend une tige, le système de fixation comprend en outre une douille (160), ladite douille comportant une collerette (161) présentant une face interne (1610) et une face externe (1611) de forme conique, la tête de l'élément de serrage étant en appui contre la face interne de la collerette tandis que la face externe de la collerette est en appui contre une fraisure (12) ménagée dans la première pièce (10), **caractérisé en ce que** le système de fixation (150) comprend un rivet (130) comportant une tête fraisée (131) à partir de laquelle s'étend une tige (132) comportant une extrémité élargie (1320) et une première rondelle (140) comportant une fraisure centrale (141) sur la surface de laquelle repose l'extrémité élargie (1320) de la tige (132) du rivet (130), la collerette (161) de la douille (160) présentant une face interne (1610) de forme conique recevant la tête fraisée (131) du rivet (130) et **en ce que** la face externe (1611) de la collerette (161) présente un angle de cône (β₁₆₁₁) supérieur à l'angle de cône (α₁₆₁₀) de la face interne (1610) de ladite collerette.

6. Assemblage selon la revendication 5, dans lequel système de fixation comprend en outre une deuxième rondelle (170) interposée entre les faces en regard des première et deuxième pièces (110, 120) en matériau composite.

7. Assemblage selon la revendication 5 ou 6, dans lequel le système de fixation comprend en outre une entretoise (180) interposée entre la deuxième pièce (120) et la première rondelle (140).

8. Assemblage selon la revendication 7, dans lequel l'entretoise (180) présente un coefficient de dilatation thermique supérieur au coefficient de dilatation thermique du rivet.

9. Assemblage selon l'une quelconque des revendications 1 à 8, dans lequel la deuxième pièce (120 ; 320) est en matériau métallique ou en matériau composite.

10. Assemblage selon l'une quelconque des revendications 1 à 9, dans lequel les première et deuxième pièces (110, 120 ; 310, 320) présentent chacune une épaisseur inférieure à 3 mm.

11. Assemblage selon l'une quelconque des revendications 1 à 10, dans lequel les première et deuxième pièces (110, 120 ; 310, 320) sont des pièces d'arrière-corps de moteur aéronautique ou de carénage aérodynamique arrière pour mât d'accrochage de moteur d'aéronef.

## Patentansprüche

1. Anordnung (400), die ein erstes Stück (310) aus Verbundmaterial und ein zweites Stück (320) umfasst, die durch mindestens ein Befestigungssystem (350) aneinander gehalten werden, das ein Spannelement umfasst, welches einen Kopf umfasst, von dem aus sich ein Stift erstreckt, wobei das Befestigungssystem ferner eine Fassung (360) umfasst, wobei die Fassung einen Flansch (361) umfasst, der eine kegelförmige Innenfläche (3610) und Außenfläche (3611) aufweist, wobei der Kopf (331) des Spannelements (330) an der Innenfläche des Flanschs anliegt, während die Außenfläche des Flanschs an einer Ausfräsung (312) anliegt, die in dem ersten Stück (310) vorgesehen ist, **dadurch gekennzeichnet, dass** das Befestigungssystem (350) eine Schraube (330), die einen Senkkopf (331) umfasst, von dem aus sich ein Stift (332) erstreckt, der mit einem Gewindeteil (3200) ausgestattet ist, und eine Mutter (340) umfasst, die ein Innengewinde (343) umfasst, das mit dem Gewindeteil (332) der Schraube (330) zusammenwirkt, wobei der Flansch (361) eine kegelförmige Innenfläche (3610) aufweist, die den Senkkopf (331) der Schraube (330) aufnimmt, und dadurch, dass die Außenfläche (3611) des Flanschs (361) einen Kegelwinkel (β₃₆₁₁) aufweist, der größer als der Kegelwinkel (α₃₆₁₀) der Innenfläche (3610) des Flanschs ist.

2. Anordnung nach Anspruch 1, wobei das Befestigungssystem ferner eine Unterlegscheibe (370) umfasst, die zwischen den Flächen gegenüber dem ersten und zweiten Stück (310, 320) aus Verbundmaterial angeordnet ist.

3. Anordnung nach Anspruch 1 oder 2, wobei das Befestigungssystem ferner einen Abstandhalter (380) umfasst, der zwischen dem zweiten Stück und der Mutter angeordnet ist.

4. Anordnung nach Anspruch 3, wobei der Abstandhalter (380) einen Wärmeausdehnungskoeffizienten aufweist, der größer als der Wärmeausdehnungskoeffizient der Schraube ist.

5. Anordnung (200), die ein erstes Stück (110) aus Verbundmaterial und ein zweites Stück (120) umfasst, die durch mindestens ein Befestigungssystem (150) aneinander gehalten werden, das ein Spannelement umfasst, welches einen Kopf umfasst, von dem aus sich ein Stift erstreckt, wobei das Befestigungssystem ferner eine Fassung (160) umfasst, wobei die Fassung einen Flansch (161) umfasst, der eine kegelförmige Innenfläche (1610) und Außenfläche (1611) aufweist, wobei der Kopf des Spannelements an der Innenfläche des Flanschs anliegt, während die Außenfläche des Flanschs an einer Ausfräsung (12) anliegt, die in dem ersten Stück (10) vorgesehen ist, **dadurch gekennzeichnet, dass** das Befestigungssystem (150) einen Niet (130), der einen Senkkopf (131) umfasst, von dem aus sich ein Stift (132) erstreckt, der ein verbreitertes Ende (1320) umfasst, und eine erste Unterlegscheibe (140) umfasst, die eine zentrale Ausfräsung (141) umfasst, auf deren Oberfläche das verbreiterte Ende (1320) des Stifts (132) des Niets (130) ruht, wobei der Flansch (161) der Fassung (160) eine kegelförmige Innenfläche (1610) aufweist, die den Senkkopf (131) des Niets (130) aufnimmt, und dadurch, dass die Außenfläche (1611) des Flanschs (161) einen Kegelwinkel (β₁₆₁₁) aufweist, der größer als der Kegelwinkel (α₁₆₁₀) der Innenfläche (1610) des Flanschs ist.

6. Anordnung nach Anspruch 5, wobei das Befestigungssystem ferner eine zweite Unterlegscheibe (170) umfasst, die zwischen den Flächen gegenüber dem ersten und zweiten Stück (110, 120) aus Verbundmaterial angeordnet ist.

7. Anordnung nach Anspruch 5 oder 6, wobei das Befestigungssystem ferner einen Abstandhalter (180) umfasst, der zwischen dem zweiten Stück (120) und der ersten Unterlegscheibe (140) angeordnet ist.

8. Anordnung nach Anspruch 7, wobei der Abstandhalter (180) einen Wärmeausdehnungskoeffizienten aufweist, der größer als der Wärmeausdehnungskoeffizient des Niets ist.

9. Anordnung nach einem der Ansprüche 1 bis 8, wobei das zweite Stück (120; 320) aus einem metallischen Material oder einem Verbundmaterial besteht.

10. Anordnung nach einem der Ansprüche 1 bis 9, wobei das erste und zweite Stück (110, 120; 310, 320) jeweils eine Dicke aufweisen, die kleiner als 3 mm ist.

11. Anordnung nach einem der Ansprüche 1 bis 10, wobei das erste und zweite Stück (110, 120; 310, 320) Hinterteile eines Flugzeugmotors oder einer hinteren aerodynamischen Verkleidung für eine Befestigungsstrebe eines Luftfahrzeugmotors sind.

## Claims

1. An assembly (400) comprising a first part (310) made of composite material and a second part (320), which parts are held one against the other by at least one fastener system (350) having a fastener element with a head from which there extends a shank, the fastener system also having a bushing (360), said bushing including a collar (361) presenting an inside face (3610) and an outside face (3611) of conical shape, the head (331) of the fastener element (330) bearing against the inside face of the collar, while the outside face of the collar bears against a countersink (312) formed in the first part (310), the assembly being **characterized in that** the fastener system (350) comprises a screw (330) having a flat head (331) from which there extends a shank (332) provided with a threaded portion (3200) and a nut (340) having tapping (343) co-operating with the threaded portion (332) of the screw (330), the collar (361) presenting an inside face (3610) of conical shape that receives the flat head (331) of the screw (330), and **in that** the outside face (3611) of the collar (361) presents a cone angle (β₃₆₁₁) greater than the cone angle (α₃₆₁₀) of the inside face (3610) of said collar.

2. An assembly according to claim 1, wherein the fastener system further comprises a washer (370) interposed between the facing faces of the first and second parts (310, 320) made of composite material.

3. An assembly according to claim 1 or claim 2, wherein the fastener system further comprises a spacer (380) interposed between the second part and the nut.

4. An assembly according to claim 3, wherein the spacer (380) presents a coefficient of thermal expansion that is greater than the coefficient of thermal expansion of the screw.

5. An assembly (200) comprising a first part (110) made of composite material and a second part (120), which parts are held one against the other by at least one fastener system (150) having a fastener element with a head from which there extends a shank, the fastener system also having a bushing (160), said bushing including a collar (161) presenting an inside face (1610) and an outside face (1611) of conical shape, the head of the fastener element bearing against the inside face of the collar, while the outside face of the collar bears against a countersink (12) formed in the first part (10), the assembly being **characterized in that** the fastener system (150) comprises a rivet (130) having a flat head (131) from which there extends a shank (132) having an enlarged end (1320) and a first washer (140) including a central countersink (141) against the surface of which the enlarged end (1320) of the shank (132) of the rivet (130) rests, the collar (161) of the bushing (160) presenting an inside face (1610) of conical shape receiving the flat head (131) of the rivet (130), and **in that** the outside face (1611) of the collar (161) presents a cone angle (β₁₆₁₁) that is greater than the cone angle (α₁₆₁₀) of the inside face (1610) of said collar.

6. An assembly according to claim 5, wherein the fastener system further comprises a second washer (170) interposed between the facing faces of the first and second parts (110, 120) made of composite material.

7. An assembly according to claim 5 or claim 6, wherein the fastener system further comprises a spacer (180) interposed between the second part (120) and the first washer (140).

8. An assembly according to claim 7, wherein the spacer (180) presents a coefficient of thermal expansion that is greater than the coefficient of thermal expansion of the rivet.

9. An assembly according to any one of claims 1 to 8, wherein the second part (120; 320) is made of metal material or of composite material.

10. An assembly according to any one of claims 1 to 9, wherein each of the first and second parts (110, 120; 310, 320) presents a thickness of less than 3 mm.

11. An assembly according to any one of claims 1 to 10, wherein the first and second parts (110, 120; 310, 320) are aeroengine afterbody parts or aerodynamic fairing parts of an aft pylon fairing.
